# EUROPÄISCHE PATENTSCHRIFT

(11) **EP 1 567 318 B1**
(45) Veröffentlichungstag und Bekanntmachung des Hinweises auf die Patenterteilung: **03.05.2006**
(21) Anmeldenummer: 03794746.2
(22) Anmeldetag: 01.09.2003
(51) Int. Cl.: B29C 45/73, B29C 49/64, B29C 49/06

(54) **SPRITZVORRICHTUNG MIT IN EINER SPRITZDORNHALTERUNG EINGESETZTEN TEMPERIERBAREN SPRITZDORNEN ZUM BLASFORMEN VON KUNSTSTOFFHOHLKÖRPERN**
INJECTION DEVICE USED FOR BLOW MOLDING HOLLOW PLASTIC BODIES, COMPRISING EXTRUSION MANDRELS THAT CAN BE TEMPERED AND ARE INSERTED INTO AN EXTRUSION MANDREL FASTENER
DISPOSITIF D'INJECTION COMPORTANT DES MANDRINS TEMPERES MONTES DANS UN PORTE-MANDRIN POUR MOULER PAR SOUFFLAGE DES CORPS CREUX EN PLASTIQUE

(30) Priorität: 13.09.2002 CH 156002
(43) Veröffentlichungstag der Anmeldung: 31.08.2005
(73) Patentinhaber: Polymold Ag, 8247 Flurlingen (CH)
(72) Erfinder: ITEN, Beat, CH-8226 Schleitheim (CH)
(74) Vertreter: Schmauder, Klaus Dieter
(86) Internationale Anmeldenummer: PCT/CH2003/000593
(87) Internationale Veröffentlichungsnummer: WO 2004/024418

(56) Entgegenhaltungen:
- EP-A- 0 700 770
- EP-A- 0 937 566
- WO-A-00/29193
- DE-A- 2 517 186
- JP-A- 8 281 713
- JP-A- 9 327 760
- US-A- 3 196 198
- US-A- 3 690 802
- US-A- 4 054 629
- US-A- 4 275 864
- US-A- 4 412 806
- US-A- 4 655 280
- US-A- 5 403 177
- US-A- 5 631 030
- US-A1- 2002 101 010

## Beschreibung

### Technisches Gebiet

Die vorliegende Erfindung betrifft eine Spritzvorrichtung mit in einer Spritzdornhalterung eingesetzten temperierbaren Spritzdornen, beispielsweise zum Blasformen von Kunststoffhohlkörpern und insbesondere von Pharmazeutika-Behältern, gemäss dem Oberbegriff des Patentanspruchs 1.

### Stand der Technik

Beim Blasformen von Kunststoffhohlkörpem (beispielsweise wie aus EP-1048435-A1 bekannt) müssen die dazu verwendeten Spritzdorne auf einer verfahrenstechnisch optimalen Temperatur gehalten werden. Nach Anlauf des Systems stellt sich bei jedem Spritzdorn zwischen der Wärmezufuhr durch den auf den Spritzdorn aufgespritzten Kunststoff und dem Wärmeabfluss durch die Kühlwirkung der Umgebungsluft auf den Spritzdorn ein Gleichgewicht ein. Allerdings stellt sich nur unter geeigneten Umständen die zum Blasformen geeignete Temperatur von selbst ein, und auch dies wird nicht auf verlässliche Weise erreicht, denn es ist mangels Eingriffsmöglichkeit nicht gewährleistet, dass die Temperatur der Spritzdorne stets die richtige bleibt, und es ist erst am Auftreten von Schwierigkeiten erkennbar, dass sie vom geeigneten Wert abweicht. Auf dieses Temperaturproblem geht EP-1048435-A1 gar nicht ein.

Zur Abhilfe bei diesem Temperaturproblem wird beim Stand der Technik (beispielsweise wie aus DE-1944918-A1 bekannt) dafür gesorgt, dass die sich von selbst einstellende Temperatur höher ist als der zum Blasformen geeignete Temperaturwert und der Spritzdorn durch Anblasen von aussen mit Luft und/oder mit Hilfe eines im Inneren des Spritzdorns vorgesehenen Kühlkreislaufes auf die geeignete Temperatur gekühlt wird, wobei in letzterem Fall das im Kühlkreislauf zirkulierende Temperiermedium Luft oder eine Flüssigkeit sein kann und letztere je nach den Temperaturverhältnissen Öl oder beispielsweise auch Wasser sein kann. Nachteilig ist bei diesen Massnahmen, dass das Temperiermedium jedem Spritzdorn zugeführt werden muss und dabei pro Spritzdorn je ein Vorlauf und ein Rücklauf des Temperiermediums in Form von flexiblen Leitungen und/oder fest verschraubten oder verlöteten Rohren vorzusehen ist. Bei einer Spritzvorrichtung mit einer Vielzahl von Spritzdornen wird dadurch an den Spritzdornen eine doppelte Vielzahl von Leitungen des Temperiermediums benötigt, nämlich je ein Vorlauf und ein Rücklauf des Temperiermediums pro Spritzdorn, was mit Nachteilen einhergeht: Eine solche Ausbildung ist störungsanfällig und wartungsaufwendig, und sie führt zudem bei jedem Auswechseln von Spritzdornen zu langen Umrichtzeiten.

Um den letztgenannten Nachteilen abzuhelfen werden beim Stand der Technik (beispielsweise wie aus WO-00/29193-A1 oder EP-0937566-A1 bekannt) Ausbildungen vorgeschlagen, bei denen zur Temperierung einer Vielzahl von Spritzdornen nur zwei Leitungen des Temperiermediums benötigt werden, indem jeweils mehrere Spritzdorne in einer gemeinsamen Halterung eingesetzt sind und letztere nur je einen Vorlauf und Rücklauf des Temperiermediums benötigt. Nachteilig ist dabei, dass zur Befestigung eines Spritzdornes in seiner Halterung ein Form- und Kraftschluss zwischen einem Haltebereich des Spritzdornes und einer dazu passenden Ausnehmung der Halterung herbeizuführen ist und die Spritzdorne dennoch leicht auswechselbar d.h. von der Halterung leicht zu lösen und daran leicht zu befestigen sein müssen. Ausserdem ist zu beachten, dass die Spritzdorne beim Betrieb der Vorrichtung ruckartige Hin- und Herbewegungen in Längsrichtung ausführen und dabei in Längsrichtung starken Beschleunigungen und folglich starken Kräften ausgesetzt werden, so dass sie in ihren Halterungen zu verrutschen tendieren: Wegen dieser Beanspruchung der in ihren Halterungen auswechselbaren Spritzdorne ist es schwierig zu gewährleisten, dass sie mit der nötigen Präzision in ihren Halterungen positioniert bleiben. Bisherige Halterungen von auswechselbaren Spritzdornen sind störungsanfällig und/oder wartungsaufwendig und führen bei jedem Auswechseln von Spritzdornen zu langen Umrichtzeiten.

Die Ausbildung eines Spritzdorns mit Vorlauf und Rücklauf eines Temperiermediums ist beispielsweise aus DE-2517186-A1 oder US-4655280-A bekannt. Im Wesentlichen ist der Spritzdorn als blindes Rohr mit einer in dessen axialer Längsrichtung diametral darin eingesetzten Trennwand ausgebildet. Im Inneren des Spritzdorns und in dessen axialer Längsrichtung werden dabei zwei längliche Kammern gebildet, die an ihrem einen Ende (in Nähe des freien Endes des Spritzdorns) über eine Aussparung der Trennwand miteinander und an ihrem anderen Ende (bei der Halterung des Spritzdorns) über je einen zylinderhülsenförmigen Anschlussstutzen mit dem Vorlauf bzw. dem Rücklauf des Temperiermediums verbunden sind. Die zylinderhülsenförmigen Anschlussstutzen dienen dazu, an den Spritzdorn je eine Vorlauf- und Rücklauf-Leitung für das Temperiermedium anzuschliessen, damit sich innerhalb des Spritzdorns eine Zirkulation des Temperiermediums einstellen kann.

### Darstellung der Erfindung

Aufgabe der Erfindung ist es demnach, eine Spritzvorrichtung der eingangs genannten Art vorzuschlagen, bei welcher die Spritzdorne trotz ihrer Beanspruchung in Längsrichtung mit der nötigen Präzision In ihren Halterungen positioniert bleiben und dennoch mit geringem Aufwand in ihren Halterungen ausgewechselt werden können.

Gelöst wird diese Aufgabe durch die im Anspruch 1 definierte Kombination von Merkmalen. Vorteilhafte Ausführungsformen der Erfindung sind in den abhängigen Ansprüchen definiert.

Vorteilhaft ist bei der so definierten Erfindung die Fixierung der Spritzdorne in ihren Halterungen durch die Anschlussstutzen. Diese Massnahme bewirkt, dass die Spritzdorne, obschon sie mit geringem Aufwand in ihren Halterungen ausgewechselt werden können, nicht verrutschen können d.h. in Längsrichtung mit der nötigen Präzision in ihren Halterungen positioniert bleiben.

Vorteilhaft ist bei der so definierten Erfindung auch die Verminderung des Aufwands für die Herstellung des gesamten Spritzwerkzeugs mit seiner Vielzahl von Spritzdornhalterungen, jede mit einer Vielzahl von darin eingesetzten Spritzdornen. Die Fixierung der Spritzdorne in ihren Halterungen durch die Anschlussstutzen bewirkt, dass zwischen jedem Haltebereich eines Spritzdornes und der dazu passenden Ausnehmung der Halterung zwar ein Formschluss, jedoch kein bedeutsamer Kraftschluss herbeigeführt zu werden braucht, was seinerseits das Auswechseln eines Spritzdorns (Montieren und Demontieren) erleichtert und somit den dafür nötigen Zeitaufwand kürzt.

Vorteilhaft ist bei der so definierten Erfindung auch noch, dass jede Spritzdornhalterung nur zwei Leitungen benötigt, nämlich nur einen Vorlauf und einen Rücklauf des Temperiermediums, während die Vielzahl der in einer einzelnen Spritzdornhalterung eingesetzten Spritzdornen das Temperiermedium über Steckverbindungen erhält, die keinen Raumbedarf ausserhalb der Spritzdornhatterung beanspruchen. Diese Massnahme vermindert den Aufwand im Zusammenhang mit der Handhabung der Vorlauf- und Rücklaufleitungen und mit dem Platzbedarf um die Spritzdornhalterungen und folglich um das gesamte Spritzwerkzeug, was seinerseits das Auswechseln eines ganzen Spritzwerkzeugs erleichtert und somit den dafür nötigen Zeitaufwand kürzt. Auch führt diese Massnahme zu einer besseren Gleichmässigkeit der Temperaturen an den verschiedenen Spritzdornen.

### Kurze Beschreibung der Zeichnungen

Ausführungsbeispiele der Erfindung werden nachfolgend anhand der Zeichnungen näher beschrieben, wobei in allen Figuren einander gleiche Teile mit gleichen Bezugszeichen bezeichnet werden. Dabei zeigen:
- Figur 1: eine Ansicht einer erfindungsgemässen Spritzvorrichtung in zusammengefügten Zustand mit in einer Spritzdornhalterung eingesetzten Spritzdornen, gesamthaft im Schnitt bei im axialen Längsschnitt dargestellten Spritzdorn;
- Figur 2a: einen Ausschnitt der gleichen Spritzvorrichtung wie in Fig. 1, in Vorderansicht;
- Figur 2b: einen dem gleichen Ausschnitt wie in Fig. 2a entsprechenden Ausschnitt der gleichen Spritzvorrichtung wie in Fig. 1, in Draufsicht;
- Figur 2c: die gleiche Spritzvorrichtung wie in Fig. 1, jedoch mit dem Spritzdorn in Seitenansicht von rechts und der Spritzdornhalterung im Querschnitt;
- Figur 3a: einander zusammengefügt, einen Tragbalken und einen Spritzdornanschlussbalken der gleichen Spritzdornhalterung wie in Fig. 1, in Vorderansicht;
- Figur 3b: die gleichen Tragbalken und Spritzdornanschlussbalken wie in Fig. 3a, in Seitenansicht von links;
- Figur 3c: die gleichen Tragbalken und Spritzdornanschlussbalken wie in Fig. 3a, in Seitenansicht von rechts;
- Figur 3d: die gleichen Tragbalken und Spritzdornanschlussbalken wie in Fig. 3a, in Draufsicht;
- Figur 3e: einen vergrösserten Teil der in Fig. 1 gezeigten Vorderansicht;
- Figur 4a: einen Körper eines Fluidanschlussbalkens der gleichen Spritzdornhalterung wie in Fig. 1, in Vorderansicht;
- Figur 4b: den gleichen Körper des Fluidanschlussbalkens wie in Fig. 4a, in Seitenansicht von links;
- Figur 4c: den gleichen Körper des Fluidanschlussbalkens wie in Fig. 4a, in Unteransicht;
- Figur 4d: einen Deckel des Fluidanschlussbalkens der gleichen Spritzdornhalterung wie in Fig. 1, in Unteransicht;
- Figur 4e: den Deckel des Fluidanschlussbalkens der gleichen Spritzdornhalterung wie in Fig. 1, in Vorderansicht;
- Figur 5: einen gleichen Spritzdorn wie in Fig. 1, im axialen Längsschnitt;
- Figur 6: einen gleichen Anschlussstutzen wie in Fig. 2c, teilweise im axialen Längsschnitt.

### Wege zur Ausführung der Erfindung

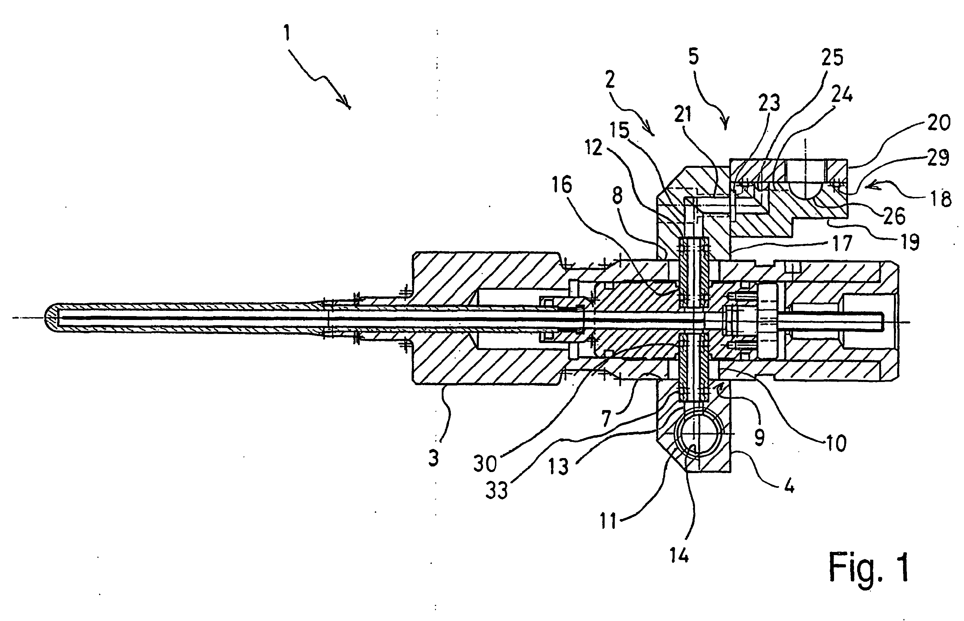

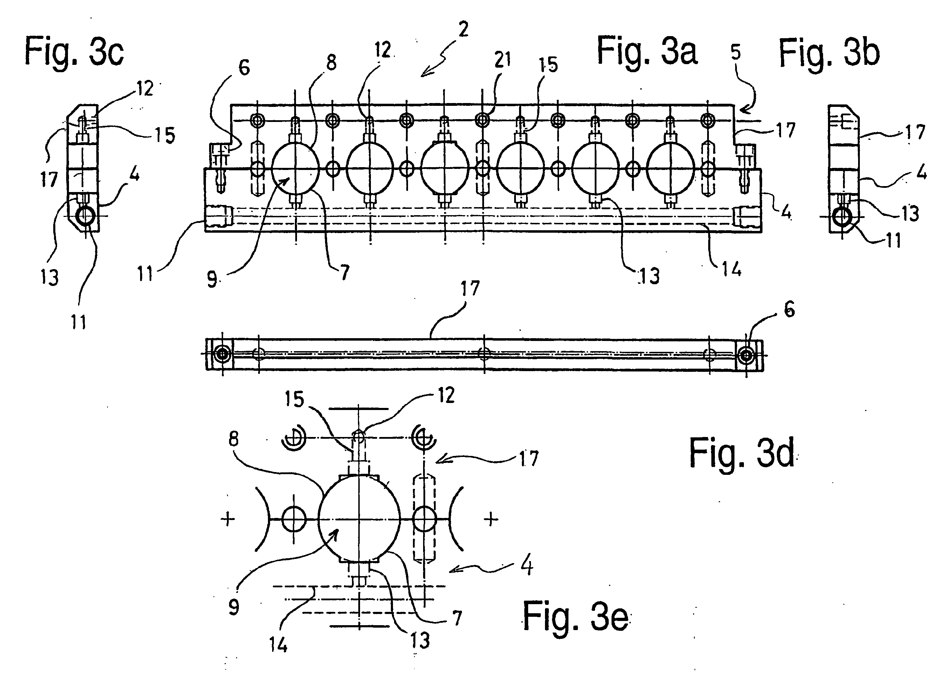

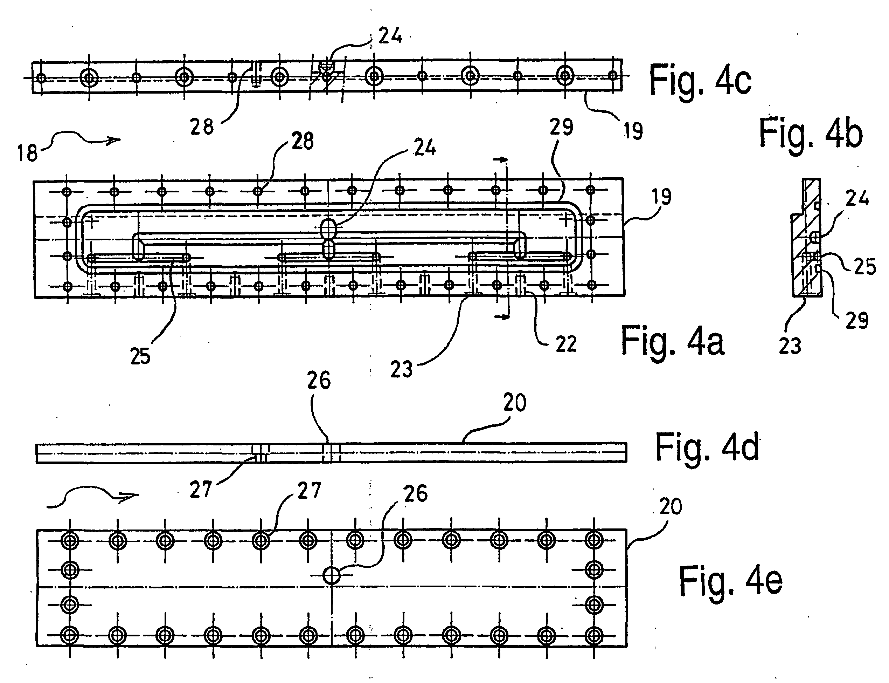

Die in Fig. 1 gezeigte, gesamthaft mit 1 bezeichnete Spritzvorrichtung ist als Teil eines Spritzwerkzeugs zu verstehen und umfasst eine gesamthaft mit 2 bezeichnete Spritzdornhalterung und eine Anzahl von Spritzdornen 3 (bei der in Fig. 3a als Beispiel der Erfindung dargestellten Ausführungsform sind sechs Spritzdorne vorgesehen). Die Spritzdornhalterung 2 ist zweiteilig und besteht aus einem Tragbalken 4 und einem gesamthaft mit 5 bezeichneten Haltebalken, die aneinander anfügbar, mittels Schrauben 6 aufeinander befestigbar und durch Lösen und Entfernen dieser Schrauben 6 voneinander lösbar sind. Der Haltebalken 5 ist selbst zweiteilig und umfasst einen Spritzdornanschlussbalken 17 (vgl. in Fig. 3a bis 3d) und einen gesamthaft mit 18 bezeichneten Fluidanschlussbalken. Dieser Fluidanschlussbalken 18 ist selbst zweiteilig und weist einen Körper 19 und einen Deckel 20 auf (vgl. in Fig. 4a bis 4e). Somit ergeben der Körper 19 und der Deckel 20 bei ihrer Zusammenfügung den Fluidanschlussbalken 18, der Fluidanschlussbalken 18 mit dem Spritzdornanschlussbalken 17 bei ihrer Zusammenfügung den Haltebalken 5, und der Haltebalkeri 5 mit dem Tragbalken 4 bei ihrer Zusammenfügung die Spritzdornhalterung 2.

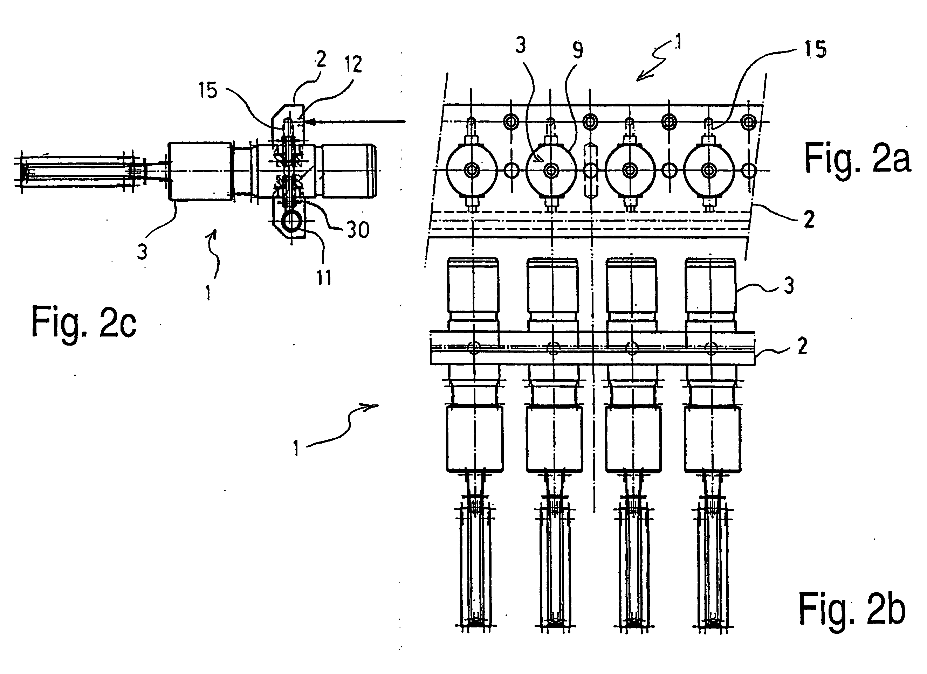

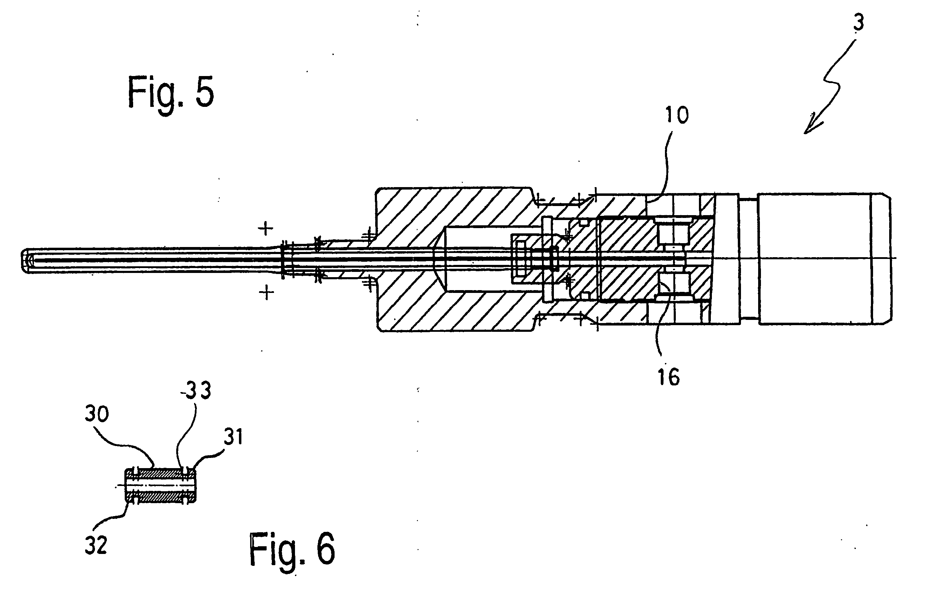

Der Tragbalken 4 und der Spritzdornanschlussbalken 17 weisen beide eine gleiche, der Anzahl von Spritzdornen 3 entsprechende Anzahl von halbzylindrischen Ausnehmungen 7 bzw. 8 auf (also sechs Ausnehmungen 7 bzw. 8 bei der in den Figuren dargestellten Ausführungsform). Bei aneinander befestigten Tragbalken 4 und Spritzdornanschlussbalken 17 liegen die halbzylindrischen Ausnehmungen 7 und 8 paarweise einander gegenüber, wobei sie einander paarweise zu gesamthaft mit 9 bezeichneten zylindrischen Ausnehmungen der Spritzdornhalterung 2 ergänzen (vgl. in Fig. 3a und 3e). In jeder zylindrischen Ausnehmung 9 sitzt ein Spritzdorn 3 (vgl. in Fig. 2a bis 2c), der bei voneinander gelösten Tragbalken 4 und Spritzdornanschlussbalken 17 in die zylindrische Ausnehmung 9 einsetzbar und darin beim Zusammenfügen von Tragbalken 4 und Spritzdornanschlussbalken 17 durch Formschluss festgehalten ist, wobei der Formschluss zwischen der zylindrischen Ausnehmung 9 und einer entsprechenden, am Spritzdorn 3 vorgesehenen Nut 10 (vgl. in Fig. 5) entsteht

Der Tragbalken 4, der Spritzdornanschlussbalken 17 und die Spritzdorne 3 weisen Kanäle auf, die weiter unten näher beschrieben werden. In der zusammengefügten Spritzvorrichtung 1, d.h. bei aneinander befestigten Tragbalken 4 und Spritzdornanschlussbalken 17 und in die zylindrischen Ausnehmungen 9 eingesetzten Spritzdornen 3, kommunizieren diese Kanäle miteinander: sie bilden dabei ein Kanalsystem, das zwischen einer am Tragbalken 4 vorgesehenen Öffnung 11 und einer am Spritzdornanschlussbalken 17 vorgesehenen Öffnung 12 eine Fluidzirkulation zur Temperierung der Spritzdorne 3 ermöglicht.

Im Zusammenhang mit jedem Spritzdorn 3 ist im Tragbalken 4 je ein Kanal 13 vorgesehen, der die zylindrische Ausnehmung 9 mit einem im Tragbalken 4 vorgesehenen Sammelkanal 14 verbindet, der seinerseits bei der Öffnung 11 endet, so dass ein Fluid von der zylindrischen Ausnehmung 9 zur Öffnung 11 geführt werden kann. Ebenfalls im Zusammenhang mit jedem Spritzdorn 3 ist im Spritzdornanschlussbalken 17 je ein Kanal 15 vorgesehen, der von einer am Spritzdornanschlussbalken 17 vorgesehenen Öffnung 12 ausgeht und in die zylindrische Ausnehmung 9 einmündet, so dass ein Fluid von der Öffnung 12 zur zylindrischen Ausnehmung 9 geführt werden kann. Seinerseits weist jeder Spritzdorn 3 einen Kanal 16 auf, der durch den Spritzdorn 3 hindurch zwei diametral gegenüberliegende Stellen der Nut 10 des Spritzdorns 3 miteinander verbindet. Auf diese Weise können die Spritzdorne 13 - sowie hilfsweise auch der Tragbalken 4 und der Spritzdornanschlussbalken 17 - durch eine Fluidzirkulation im beschriebenen Kanalsystem temperiert werden. Bei der Öffnung 11 ist der Tragbalken 4 bzw. sein Kanalsystem mit einem Gefäss zum Auffangen des aus der Spritzvorrichtung 1 austretenden Fluids verbindbar.

Der Spritzdornanschlussbalken 17 und der Fluidanschlussbalken 18 sind aneinander anfügbar, mittels durch glatte Bohrungen 21 im Spritzdornanschlussbalken 17 geführter und in Gewindebohrungen 22 des Fluidanschlussbalkens 18 festgeschraubter (nicht dargestellter) Schrauben aufeinander befestigbar und durch Lösen und Entfernen dieser Schrauben voneinander lösbar.

Der Spritzdornanschlussbalken 17 und der Fluidanschlussbalken 18 weisen Kanäle auf, die weiter unten näher beschrieben werden. Im zusammengefügten Haltebalken 5, d.h. bei aneinander befestigten Spritzdornanschlussbalken 17 und Fluidanschlussbalken 18, kommunizieren diese Kanäle miteinander: sie bilden dabei ein Kanalsystem, wobei je eine Öffnung 12 am Spritzdornanschlussbalken 17 und eine entsprechende, am Fluidanschlussbalken 18 vorgesehene Öffnung 23 kongruent sind. Von den Öffnungen 23 führt im Fluidanschlussbalken 18 ein Netz von sich zu einem Sammelkanal 24 vereinigenden Kanälen 25. Der Sammelkanal 24 geht von einer am Fluidanschlussbalken 18 vorgesehenen Öffnung 26 aus, so dass im zusammengefügten Haltebalken 5 ein Fluid von der Öffnung 26 zur zylindrischen Ausnehmung 9 geführt werden kann, um die Fluidzirkulation zur Temperierung der Spritzdorne 3 zu ermöglichen. Bei der Öffnung 26 ist der Haltebalken 5 bzw. sein Kanalsystem mit einer Quelle des in die Spritzvorrichtung 1 einzuführenden Fluids verbindbar.

Im Fluidanschlussbalken 18 sind die Kanäle 25 einschliesslich des Sammelkanals 24 als am Körper 19 des Fluidanschlussbalkens 18 beispielsweise durch Fräsen angebrachte und vom Deckel 20 überdeckte Nuten ausgebildet. Somit entsteht das Kanalsystem im Fluidanschlussbalken 18 bei der Zusammenfügung des Körpers 19 und des Deckels 20, die mittels durch glatte Bohrungen 27 im Deckel 20 geführter und in Gewindebohrungen 28 des Körpers 19 festgeschraubter (nicht dargestellter) Schrauben aufeinander befestigbar und durch Lösen und Entfernen dieser Schrauben voneinander lösbar sind.

Im Deckel 20 ist zudem eine Dichtungsnut 29 vorgesehen, in die eine (nicht dargestellte) Dichtung einsetzbar ist, um den Fluidanschlussbalken 18 d.h. den Deckel 20 und den Körper 19 gegeneinander abzudichten.

Ebenfalls abgedichtet sind die Spritzdorne 3 gegenüber dem Tragbalken 4 und dem Haltebalken 5 bzw. (als Teil davon) dem Spritzdornanschlussbalken 17. Zu diesem Zweck sind zylinderhülsenförmige Anschlussstutzen 30 vorgesehen (vgl. Fig. 2c und 6), die bei aneinander befestigten Tragbalken 4 und Haltebalken 5 paarweise darin im Bereich eines Spritzdornes 3 eingesetzt sind. Einer der Anschlussstutzen 30 ist mit seinem einen Ende 31 in den im Tragbalken 4 vorgesehenen Kanal 13 und mit seinem anderen Ende 32 in den im Spritzdorn 3 vorgesehenen Kanal 16 eingesetzt, und der andere Anschlussstutzen 30 ist mit seinem einen Ende 31 in den im Haltebalken 5 vorgesehenen Kanal 15 und mit seinem anderen Ende 32 in den im Spritzdorn 3 vorgesehenen Kanal 16 eingesetzt, wobei die beiden Anschlussstutzen 30 im Spritzdorn 3 einander diametral gegenüberliegen. Durch ihren Hohlraum verbinden die zylinderhülsenförmige Anschlussstutzen 30 die Kanäle 13 und 16 bzw. 15 und 16, in die sie eingesetzt sind, um die Fluidzirkulation zur Temperierung der Spritzdorne 3 zu ermöglichen. Zur seiner Abdichtung gegenüber dem Spritzdorn 3 und der Spritzdornhalterung 2 d.h. dem Tragbalken 4 bzw. dem Haltebalken 5 weist der zylinderhülsenförmiger Anschlussstutzen 30 in Nähe seiner Enden 31 und 32 aussenseitig je eine zur Aufnahme eines (nicht dargestellten) Dichtungsringes bestimmte Dichtungsnut 33 auf. Die beiden in einen Spritzdorn 3 eingesetzten Anschlussstutzen 30 dichten somit die Fluidzirkulation gegenüber einer sich zwischen dem Spritzdorn 3 und dem Tragbalken 4 bzw. Haltebalken 5 bildenden Fuge ab, und sie halten den Spritzdorn 3 an der Spritzdornhalterung 2 fest.

Durch das Eingreifen der beiden Anschlussstutzen 30 an ihrem einen Ende 31 in den im Haltebalken 5 vorgesehenen Kanal 13 bzw. 15 und an ihrem anderen Ende 32 in den im Spritzdorn 3 vorgesehenen Kanal 16 wird der Spritzdorn 3 gegenüber der gesamthaft mit 2 bezeichneten Spritzdornhalterung fest und präzis positioniert, mit der Folge, dass der Spritzdorn 3 an der Spritzdornhalterung 2 nicht verrutschen kann, weil die beiden Anschlussstutzen 30 im Spritzdorn 3 einander diametral gegenüber und somit quer zur Längsachse des Spritzdorns 3 liegen. In anderen Worten, die beiden Anschlussstutzen 30 wirken am Spritzdorn 3 wie Stifte, die ihn in dessen Längsrichtung an der Spritzdornhalterung 2 festhalten.

### BEZUGSZEICHENLISTE

- 1: Spritzvorrichtung gesamthaft
- 2: Spritzdornhalterung gesamthaft
- 3: Spritzdorn
- 4: Tragbalken
- 5: Haltebalken
- 6: Schrauben
- 7: halbzylindrische Ausnehmung im Tragbalken 4
- 8: halbzylindrische Ausnehmung im Spritzdornanschlussbalken 17
- 9: zylindrische Ausnehmung der Spritzdornhalterung 2
- 10: Nut am Spritzdorn 3
- 11: Öffnung am Tragbalken 4
- 12: Öffnung am Spritzdornanschlussbalken 17
- 13: Kanal im Tragbalken 4
- 14: Sammelkanal im Tragbalken 4
- 15: Kanal im Spritzdornanschlussbalken 17
- 16: Kanal im Spritzdorn 3
- 17: Spritzdornanschlussbalken
- 18: Fluidanschlussbalken
- 19: Körper des Fluldanschlussbalkens 18
- 20: Deckel des Fluidanschlussbalkens 18
- 21: Bohrung im Spritzdornanschlussbalken 17
- 22: Gewindebohrung im Fluidanschlussbalken 18
- 23: Öffnung am Fluldanschlussbalken 18
- 24: Sammelkanal im Fluidanschlussbalken 18
- 25: Kanal im Fluidanschlussbalken 18
- 26: Öffnung am Fluidanschlussbalken 18
- 27: Bohrung im Deckel 20 des Fluidanschlussbalkens 18
- 28: Gewindebohrung im Körper 19 des Fluidanschlussbalkens 18
- 29: Dichtungsnut im Deckel 20 des Fluidanschlussbalkens 18
- 30: Anschlussstutzen
- 31: Ende des Anschlussstutzens 30
- 32: Ende des Anschlussstutzens 30
- 33: Dichtungsnut 33 in Endnähe des Anschlussstutzens 30

## Patentansprüche

1. Spritzvorrichtung mit in einer Spritzdornhalterung (2) eingesetzten temperierbaren Spritzdornen (3), beispielsweise zum Blasformen von Kunststoffhohlkörpern, wobei die Spritzdornhalterung (2) zylindrische Ausnehmungen (9) aufweist, in denen je ein Spritzdorn (3) festgehalten ist, und die Spritzdornhalterung (2) sowie die Spritzdorne (3) jeweilige Kanäle (13, 14, 15, 16, 24, 25) aufweisen, die zu zweien miteinander kommunizieren, um eine Fluidzirkulation zur Temperierung der Spritzdorne zu ermöglichen,
**gekennzeichnet durch** eine zweiteilige Ausbildung der Spritzdornhalterung (2) mit einem Tragbalken (4) und einem Haltebalken (5), die aneinander anfügbar und befestigbar und voneinander lösbar sind und je eine gleiche Anzahl von halbzylindrischen Ausnehmungen (7, 8) aufweisen, die einander in der Spritzdornhalterung (2) zu zylindrischen Ausnehmungen (9) ergänzen, in die je ein Spritzdorn (3) bei voneinander gelösten Tragbalken (4) und Haltebalken (5) einsetzbar und bei aneinander befestigten Tragbalken (4) und Haltebalken (5) festgehalten ist,
und **durch** zylinderhülsenförmige Anschlussstutzen (30), welche die Fluidzirkulation gegenüber einer sich zwischen dem Spritzdorn (3) und dem Tragbalken (4) bzw. Haltebalken (5) bildenden Fuge abdichten sowie den Spritzdorn (3) an der Spritzdornhalterung (2) festhalten.

2. Spritzvorrichtung nach Anspruch 1, **dadurch gekennzeichnet, dass** die zylinderhülsenförmigen Anschlussstutzen (30) bei aneinander befestigten Tragbalken (4) und Haltebalken (5) mit ihrem einen Ende (31) in einen der im Tragbalken (4) und Haltebalken (5) vorgesehenen Kanäle (13, 15) und mit ihrem anderen Ende (32) in einen der in einem Spritzdorn (3) vorgesehenen Kanäle (16) eingesetzt sind und dabei die genannten Kanäle jeweils zu zweien (13-16; 15-16) miteinander verbinden.

3. Spritzvorrichtung nach Anspruch 1, **dadurch gekennzeichnet, dass** ein Anschlussstutzen (30) in Nähe seiner Enden (31, 32) aussenseitig je eine zur Aufnahme eines Dichtungsringes bestimmte Dichtungsnut (33) aufweist.

4. Spritzvorrichtung nach Anspruch 1, **gekennzeichnet durch** eine zweiteilige Ausbildung des Haltebalkens (5) mit einem Spritzdornanschlussbalken (17) und einem mit einer Öffnung (26) versehenen Fluidanschlussbalken (18), die aneinander anfügbar und befestigbar und voneinander lösbar sind und jeweilige Kanäle (15, 16, 24, 25) aufweisen, die im Haltebalken (5) miteinander kommunizieren, um einen Durchgang der Fluidzirkulation von der am Fluidanschlussbalken (18) vorgesehenen Öffnung (26) zu und **durch** die im Tragbalken (4) und in den Spritzdornen (3) angeordneten Kanäle (16) bis zu einer am Tragbalken (4) vorgesehenen Öffnung (11) zu ermöglichen.

5. Spritzvorrichtung nach Anspruch 1, **gekennzeichnet durch** eine zweiteilige Ausbildung des Fluidanschlussbalkens (18) mit einem Kanäle (24, 25) aufweisenden Körper (19) und einem Deckel (20), die aneinander anfügbar und befestigbar und voneinander lösbar sind, wobei die Kanäle (24, 25) als am Körper (19) angebrachte und vom Deckel (20) überdeckte Nuten ausgebildet sind und die am Fluidanschlussbalken (18) vorgesehene Öffnung (26) am Deckel (20) angeordnet ist.

## Claims

1. An injection device used for example for blow molding hollow plastic bodies, comprising temperature-controllable blowing mandrels (3) inserted in a blowing mandrel holder (2), the blowing mandrel holder (2) having cylindrical recesses (9), in each of which a blowing mandrel (3) is fixedly held, and the blowing mandrel holder (2) and the blowing mandrels (3) having respective channels (13, 14, 15, 16, 24, 25), which communicate with one another in twos, in order to make possible a fluid circulation for controlling the temperature of the blowing mandrels,
**characterized by** a two-part design of the blowing mandrel holder (2) with a supporting bar (4) and a holding bar (5), which can be joined onto each other and fastened and can be released from each other and each have an identical number of half-cylindrical recesses (7, 8), which complement one another in the blowing mandrel holder (2) to form cylindrical recesses (9), in each of which a blowing mandrel (3) can be inserted when the supporting bar (4) and the holding bar (5) are released from each other and is fixedly held when the supporting bar (4) and the holding bar (5) are fastened on each other,
and by connecting pieces (30) in the form of cylindrical sleeves, which seal the fluid circulation with respect to a gap forming between the blowing mandrel (3) and the supporting bar (4) or the holding bar (5) and also hold the blowing mandrel (3) fixedly on the blowing mandrel holder (2).

2. The injection device as claimed in claim 1, **characterized in that**, with the supporting bar (4) and the holding bar (5) fastened on each other, the connecting pieces (30) in the form of cylindrical sleeves are inserted by their one end (31) into one of the channels (13, 15) provided in the supporting bar (4) and the holding bar (5) and by their other end (32) into one of the channels (16) provided in a blowing mandrel (3), and thereby connect said channels to one another respectively in twos (13-16; 15-16).

3. The injection device as claimed in claim 1, **characterized in that** a connecting piece (30) has on the outside in the vicinity of each of its ends (31, 32) a sealing groove (33) intended for receiving a sealing ring.

4. The injection device as claimed in claim 1, **characterized by** a two-part design of the holding bar (5) with a blowing mandrel connecting bar (17) and a fluid connecting bar (18) provided with an opening (26), which can be joined onto each other and fastened and can be released from each other and have respective channels (15, 16, 24, 25), which communicate with one another in the holding bar (5) in order to make possible a passage of the fluid circulation from the opening (26) provided on the fluid connecting bar (18) to and through the channels (16) arranged in the supporting bar (4) and in the blowing mandrels (3) up to an opening (11) provided on the supporting bar (4).

5. The injection device as claimed in claim 1, **characterized by** a two-part design of the fluid connecting bar (18) with a body (19) having channels (24, 25) and a cover (20), which can be joined onto each other and fastened and can be released from each other, the channels (24, 25) being formed as grooves which are provided on the body (19) and covered over by the cover (20) and the opening (26) provided on the fluid connecting bar (18) being arranged on the cover (20).

## Revendications

1. Dispositif d'injection comprenant des mandrins (3) pouvant être tempérés, montés dans un porte-mandrins (2), par exemple, pour mouler par soufflage des corps creux en plastique, le porte-mandrins (2) présentant des évidements cylindriques (9), dans lesquels chaque mandrin (3) est retenu, et le porte-mandrins (2) ainsi que les mandrins (3) présentant des canaux respectifs (13, 14, 15, 16, 24, 25), qui communiquent deux par deux les uns avec les autres pour permettre une circulation de fluide destinée à tempérer les mandrins,
**caractérisé par**
une réalisation en deux parties du porte-mandrins (2) avec une barre portante (4) et une barre de retenue (5), qui peuvent être jointes et fixées l'une à l'autre ou détachées l'une de l'autre, et présentent chacune un nombre égal d'évidements semi-cylindriques (7, 8), qui s'ajoutent dans le porte-mandrin (2) aux évidements cylindriques (9), dans lesquels chaque mandrin (3) peut être monté lorsque la barre portante (4) et la barre de retenue (5) sont détachées l'une de l'autre et est retenu lorsque la barre portante (4) et la barre de retenue (5) sont fixées l'une à l'autre,
et des raccords en forme de douilles cylindriques (30), qui rendent étanche la circulation de fluide par rapport à un joint se formant entre le mandrin (3) et la barre portante (4) ou la barre de retenue (5), et qui fixent le mandrin (3) sur le porte-mandrins (2).

2. Dispositif d'injection selon la revendication 1,
**caractérisé en ce que**
les raccords en forme de douilles cylindriques sont montés par une extrémité (31) dans l'un des canaux (13, 15) prévus dans la barre portante (4) et la barre de retenue (5) lorsque la barre portante (4) et la barre de retenue (5) sont fixées l'une à l'autre, et par leur autre extrémité (32) dans l'un des canaux (16) prévus dans un mandrin (3), et y relient lesdits canaux respectivement deux par deux (13-16; 15-16) les uns avec les autres.

3. Dispositif d'injection selon la revendication 1,
**caractérisé en ce qu'**
un raccord (30) présente à proximité de ses extrémités (31, 32) sur le côté extérieur respectivement une certaine rainure pour joint (33) pour la réception d'une bague d'étanchéité.

4. Dispositif d'injection selon la revendication 1,
**caractérisé par**
une configuration en deux parties de la barre de retenue (5) avec une barre de raccordement de mandrin (17) et une barre de raccordement de fluide (18) munie d'une ouverture (26), qui peuvent être jointes et fixées l'une à l'autre ou détachées l'une de l'autre, et présentent des canaux respectifs (15, 16, 24, 25), qui communiquent les uns avec les autres dans la barre de retenue (5) pour permettre un passage de la circulation de fluide depuis l'ouverture (26) prévue sur la barre de raccordement de fluide (18) aux canaux et à travers ces derniers (16) agencés dans la barre portante (4) et dans les mandrins (3), jusqu'à une ouverture (11) prévue sur la barre portante (4).

5. Dispositif d'injection selon la revendication 1,
**caractérisé par**
une configuration en deux parties de la barre de raccordement de fluide (18) comportant un corps (19) présentant des canaux (24, 25) et un couvercle (20), qui peuvent être joints et fixés l'un à l'autre ou détachés l'un de l'autre, les canaux (24, 25) étant réalisés comme des rainures placées sur le corps (19) et recouvertes par le couvercle (20), et l'ouverture (26) sur la barre de raccordement de fluide (18) est prévue sur le couvercle (20).
